# EUROPÄISCHE PATENTANMELDUNG

(11) **EP 1 400 400 A2**
(43) Veröffentlichungstag der Anmeldung: **24.03.2004**
(21) Anmeldenummer: 03017818.0
(22) Anmeldetag: 05.08.2003
(51) Int. Cl.: B60N 2/36

(54) **Fahrzeugsitz, insbesondere Kraftfahrzeugsitz**

(30) Priorität: 17.09.2002 DE 10242968
(71) Anmelder: KEIPER GmbH & Co. KG, 67657 Kaiserslautern (DE)
(72) Erfinder: Markel, Christian, 55232 Alzey (DE)
(74) Vertreter: Patentanwälte Hosenthien-Held und Dr. Held

(57) **Zusammenfassung**

Ein Fahrzeugsitz, insbesondere Kraftfahrzeugsitz, mit einem Sitzkissen (4) und einer Lehne (6), ist von einer Gebrauchsstellung, in welcher das Sitzkissen (4) im wesentlichen flach und die Lehne (6) im wesentlichen aufrecht angeordnet ist, durch Bewegen des Sitzkissens (4) und der Lehne (6) in wenigstens eine Inversstellung überführbar, in welcher das Sitzkissen (4) im wesentlichen aufrecht und die Lehne (6) flach angeordnet ist.

## Beschreibung

Die Erfindung betrifft einen Fahrzeugsitz, insbesondere einen Kraftfahrzeugsitz, mit den Merkmalen des Oberbegriffs des Anspruches 1.

Ein bekannter Fahrzeugsitz dieser Art kann von einer einsitzbaren Gebrauchsstellung durch Vorschwenken der Lehne und Hochklappen des Sitzkissens samt Lehne in eine gewickelte Packagestellung überführt werden.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß diese weitere Stellung eine Inversstellung ist, in welcher das Sitzkissen im wesentlichen aufrecht und die Lehne flach angeordnet ist, steht dem Benutzer des dahinter befindlichen Fahrzeugsitzes eine gepolsterte Ablagemöglichkeit zur Verfügung, insbesondere für seine Füße. Die Kopfstütze kann optional auf der Lehne verbleiben oder umgesteckt werden. Bei geeigneter, bevorzugter Gestaltung der Polsterkörper steht in dieser Inversstellung ein vollwertiger, einsitzbarer, in seiner Ausrichtung zur Fahrtrichtung gedrehter Fahrzeugsitz zur Verfügung. Außer der Inversstellung sind auch aufrechte, gewickelte Packagestellungen und flache Bodenstellungen möglich.

Der Übergang von der Gebrauchsstellung in die Inversstellung erfolgt vorzugsweise am einfachsten, indem das Sitzkissen eine Schwenkbewegung nach oben um eine im hinteren Bereich vorgesehene Kissenschwenkachse vollführt, wobei die Lehne vorzugsweise zugleich diese Schwenkbewegung nachvollzieht, also nach hinten und unten schwenkt. Zur Steuerung der Schwenkbewegung ist vorzugsweise ein Kniehebel vorgesehen, welcher einerseits im vorderen Bereich und andererseits zumindest während des Übergangs von der Gebrauchsstellung in die Inversstellung fahrzeugstrukturfest angelenkt ist, wobei der Kniehebel sich zumindest über einen Teil der Schwenkbewegung des Sitzkissens hinweg streckt.

Um den vor dem Sitzkissen frei werdenden Raum auszunützen, erfährt die Kissenschwenkachse zumindest während eines Teiles der Schwenkbewegung des Sitzkissens vorzugsweise eine Verschiebung nach vorne, mit welcher das sich aufrichtende Sitzkissen als Ganzes nach vorne geschoben wird. Die Verschiebung der Kissenschwenkachse erfolgt vorzugsweise nachdem der Kniehebel gestreckt ist, wobei während der Verschiebung der Kissenschwenkachse das Sitzkissen seine Schwenkbewegung fortsetzt. Währenddessen ist der Kniehebel im gestreckten Zustand vorzugsweise gesichert.

Für eine definierte Verschiebung der Kissenschwenkachse sind vorzugsweise Führungsschienen vorgesehen, welche zumindest während des Übergangs von der Gebrauchsstellung in die Inversstellung fahrzeugstrukturfest sind. Für einen manuellen Übergang sind vorzugsweise in den Führungsschienen beweglich geführte Gleitsteine vorgesehen, wobei die Kissenschwenkachse fest oder mittels beweglicher Schwingen an den Gleitsteinen angebracht ist. Die Lösung mit den beweglichen Schwingen ist besonders für höher gelegene Sitzkissen geeignet, um eine tiefere Endposition der Lehne zu erreichen oder um den nach der Verschiebung hinter dem Sitzkissen frei werdenden Raum gegebenenfalls - nach Weiterführung in eine Packagestellung - als Laderaum bis zum Fahrzeugboden zu nutzen. Für eine definierte Gesamtbewegung erfolgt vorzugsweise eine Sperre der Gleitsteine, bis der Kniehebel gestreckt ist. Mittels einer Koppel zwischen dem Kniehebel und den Gleitsteinen kann eine Einhandbedienung erreicht werden.

Der Übergang in die Inversstellung kann auch motorisch durchgeführt werden, beispielsweise indem ein mit den Führungsschienen in Getriebeverbindung stehender Motor das Sitzkissen einerseits mittels eines untersetzenden Getriebes schwenkt und andererseits entlang den Führungsschienen verschiebt.

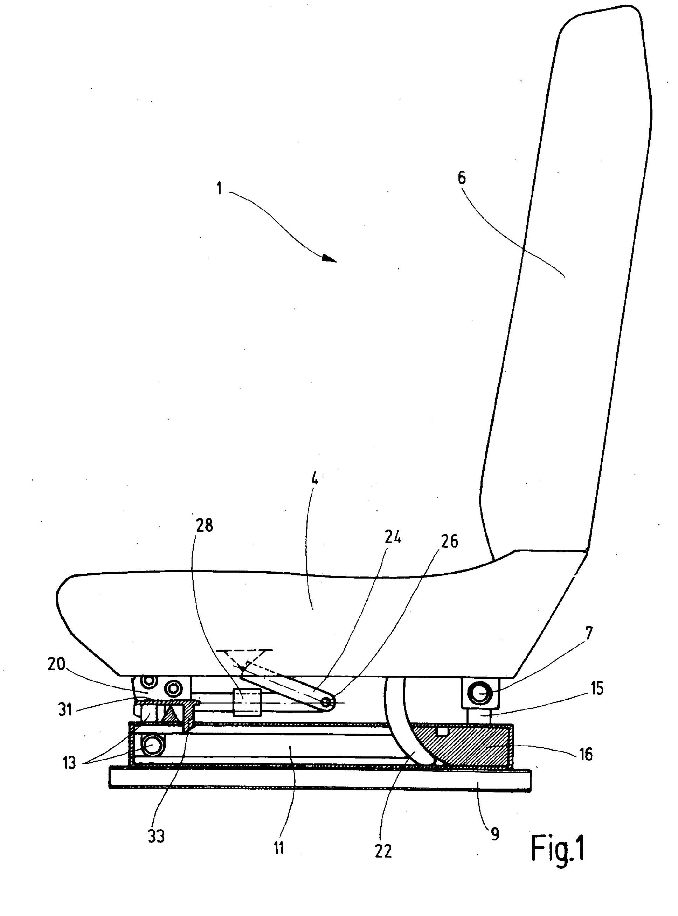

Im folgenden ist die Erfindung anhand von sechs in der Zeichnung dargestellten Ausführungsbeispielen mit mehreren Abwandlungen näher erläutert. Es zeigen
- Fig. 1: eine teilweise geschnitten dargestellte Seitenansicht des ersten Ausführungsbeispiels in der Gebrauchsstellung,

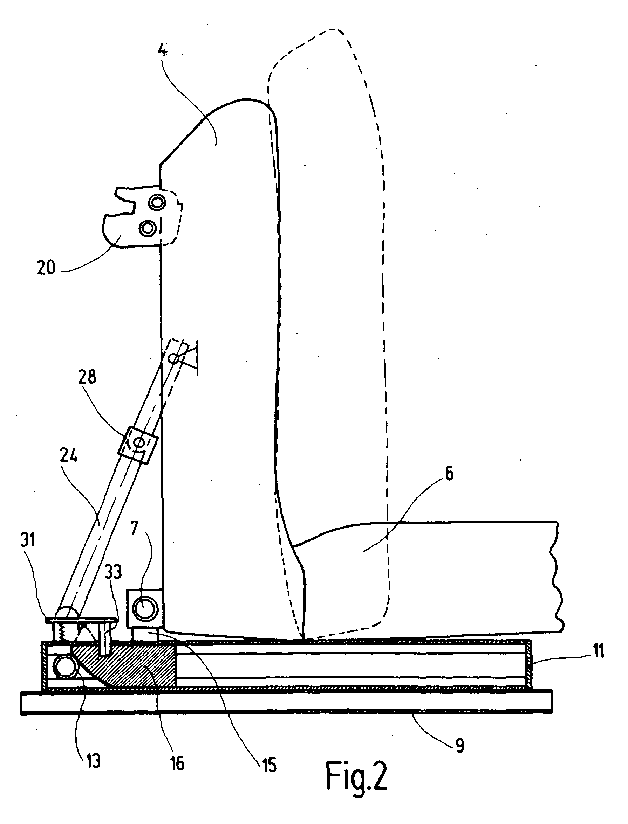

- Fig. 2: eine Fig. 1 entsprechende Darstellung der Inversstellung, wobei die Position der Lehne in der Packagestellung gestrichelt angedeutet ist,

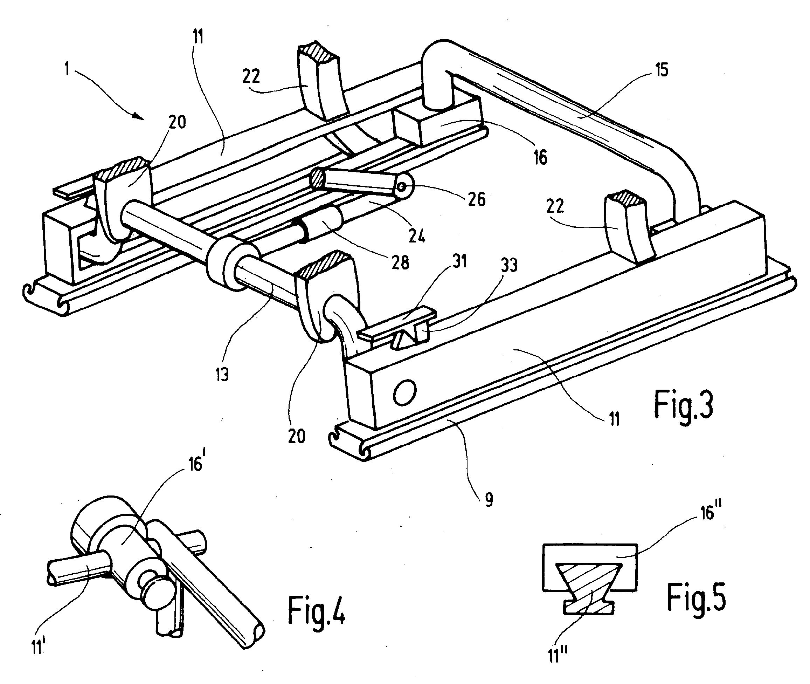

- Fig. 3: eine perspektivische Ansicht des Unterbaus des ersten Ausführungsbeispiels,

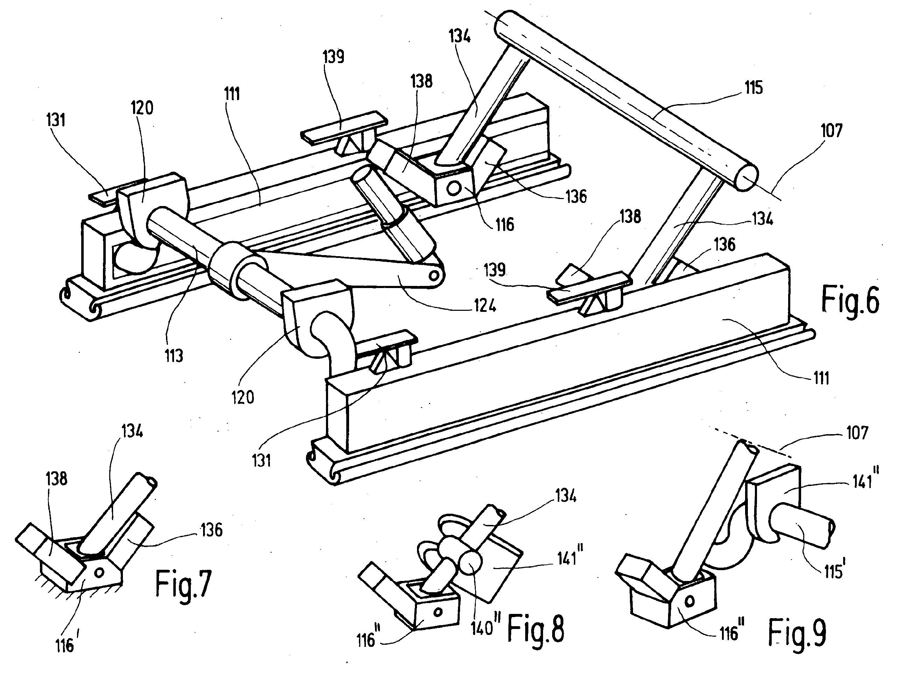

- Fig. 4: eine perspektivische Teilansicht des Unterbaus der ersten Abwandlung des ersten Ausführungsbeispiels,
- Fig. 5: einen Schnitt durch einen Teil des Unterbaus der zweiten Abwandlung des ersten Ausführungsbeispiels,
- Fig. 6: eine perspektivische Ansicht des Unterbaus des zweiten Ausführungsbeispiels,
- Fig. 7: eine perspektivische Teilansicht des Unterbaus der ersten Abwandlung des zweiten Ausführungsbeispiels,
- Fig. 8: eine perspektivische Teilansicht des Unterbaus der zweiten Abwandlung des zweiten Ausführungsbeispiels,
- Fig. 9: eine perspektivische Teilansicht des Unterbaus der dritten Abwandlung des zweiten Ausführungsbeispiels,

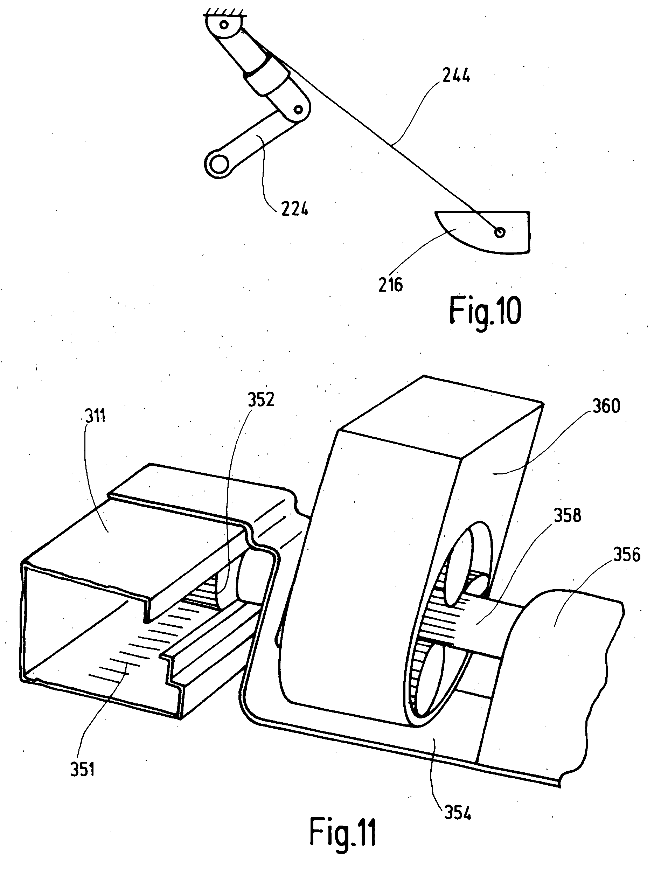

- Fig. 10: eine schematische Teildarstellung des dritten Ausführungsbeispiels,
- Fig. 11: eine perspektivische Teilansicht des vierten Ausführungsbeispiels,
- Fig. 12: eine schematische Darstellung der gemeinsamen Abwandlung in der Gebrauchsstellung,
- Fig. 13: eine schematische Darstellung der gemeinsamen Abwandlung in der Inversstellung,

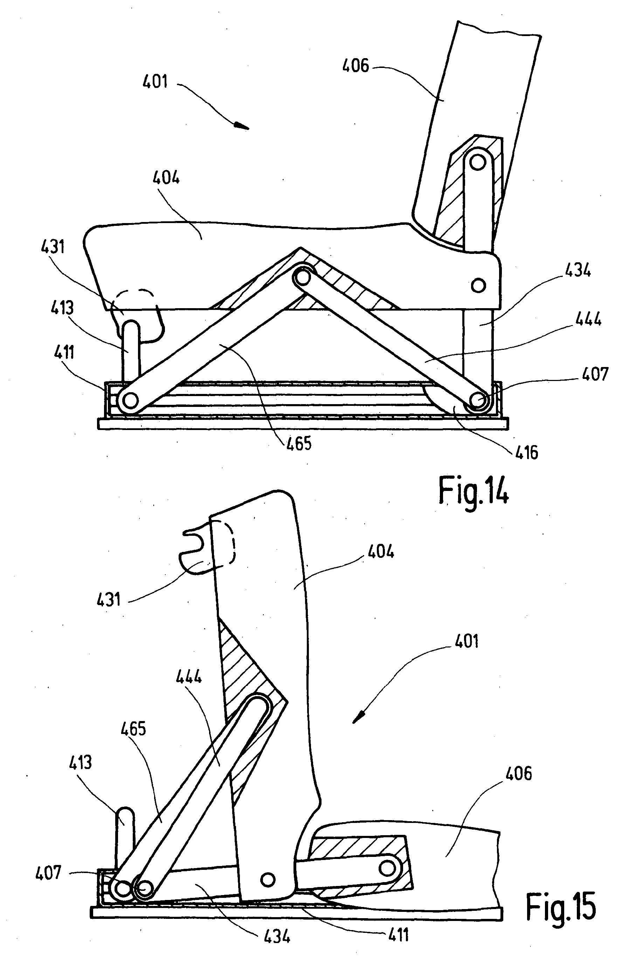

- Fig. 14: eine teilweise geschnitten dargestellte Seitenansicht des fünften Ausführungsbeispiels in der Gebrauchsstellung,

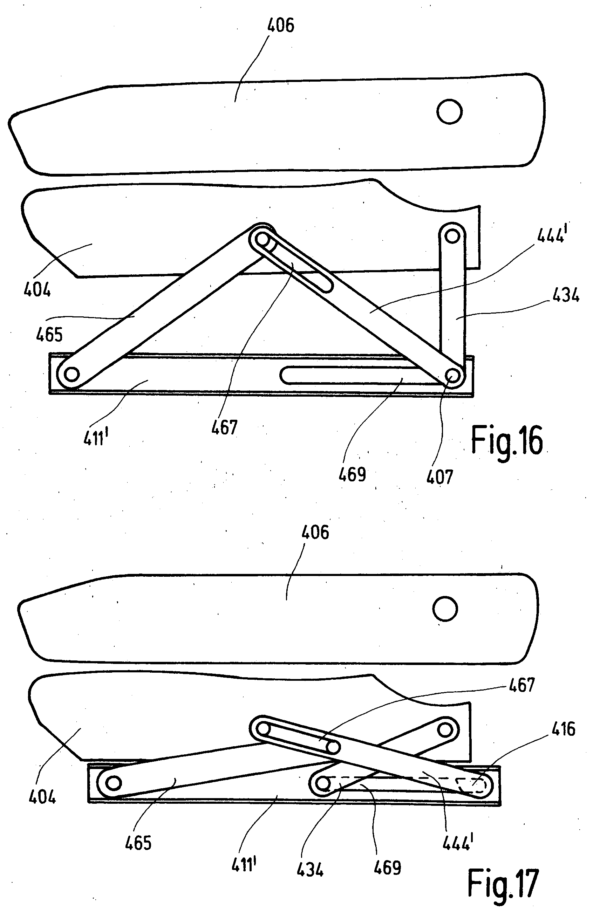

- Fig. 15: eine Ansicht entsprechend Fig. 14 in der Inversstellung,
- Fig. 16: eine schematische Seitenansicht einer ersten Abwandlung des fünften Ausführungsbeispiels in der Gebrauchsstellung,
- Fig. 17: eine Ansicht entsprechend Fig. 16 in der Bodenstellung,

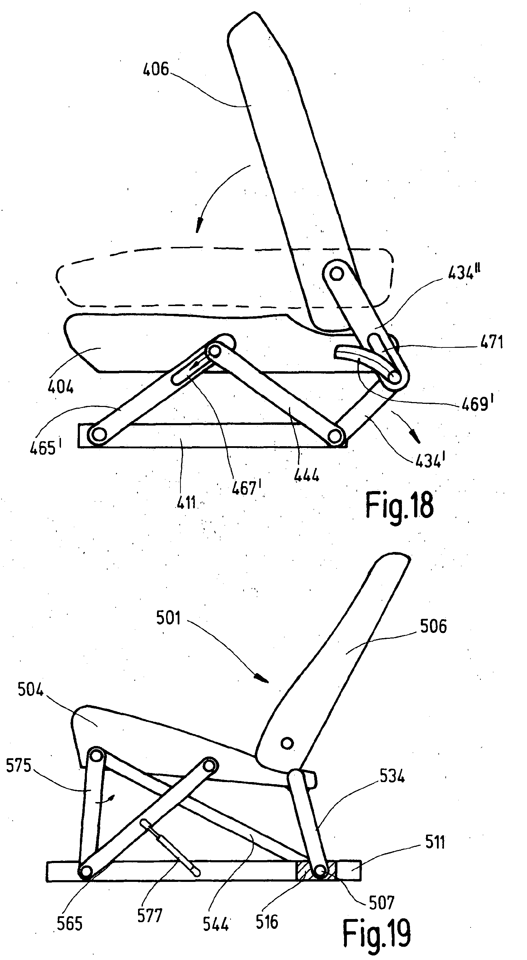

- Fig. 18: eine schematische Seitenansicht einer zweiten Abwandlung des fünften Ausführungsbeispiels in einer Zwischenstellung,
- Fig. 19: eine schematische Seitenansicht des sechsten Ausführungsbeispiels in der Gebrauchsstellung, und

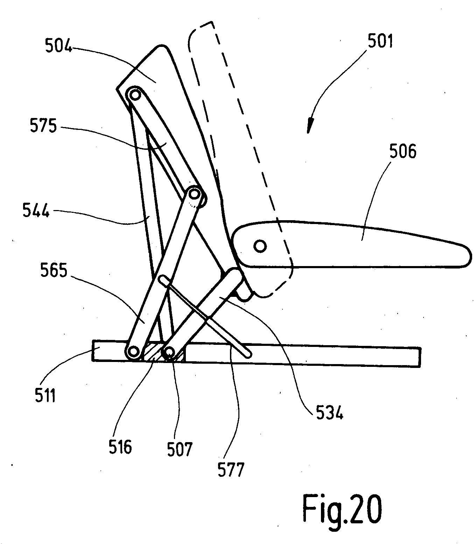

- Fig. 20: eine Ansicht entsprechend Fig. 19 in der Inversstellung.

Ein Fahrzeugsitz 1 ist als Beifahrersitz oder als Sitz in einer mittleren Sitzreihe eines Kraftfahrzeuges vorgesehen. Auf einem bei den verschiedenen Ausführungsbeispielen leicht variierenden Unterbau ist ein einen Sitzrahmen aufweisendes Sitzkissen 4 vorgesehen, an welchem mittels seitlicher Beschläge eine Lehne 6 angebracht ist. In der für einen Benutzer einsitzbaren Gebrauchsstellung ist das Sitzkissen 4 im wesentlichen flach, d.h. näherungsweise horizontal, und die Lehne 6 im wesentlichen aufrecht, d.h. näherungsweise vertikal, in der Regel 10° - 20° aus der Vertikalen nach hinten geneigt, angeordnet. Die Richtungsangaben beziehen sich im folgenden auf die übliche Anordnung des Fahrzeugsitzes 1 im Kraftfahrzeug und dessen gewöhnliche Fahrtrichtung.

Der Fahrzeugsitz 1 kann in allen Ausführungsbeispielen in eine Inversstellung überführt werden, indem das Sitzkissen 4 um eine in seinem hinteren Bereich angeordnete Kissenschwenkachse 7 hochgeschwenkt wird, so daß es wenigstens näherungsweise aufrecht angeordnet ist und seine Vorderkante zum Fahrzeughimmel weist. Bei diesem Übergang in die Inversstellung schwenkt zugleich die Lehne 6 nach unten, so daß sie in der Nähe des Fahrzeugbodens und im wesentlichen horizontal angeordnet ist. Der Insasse, welcher den dahinter angeordneten Fahrzeugsitz benutzt, kann nun seine Beine auf dem Fahrzeugsitz 1, d.h. auf der Lehne 6, ablegen.

Vorzugsweise ist der Fahrzeugsitz 1 in allen Ausführungsbeispielen so ausgebildet, daß die Lehne 6 auf das Sitzkissen 4 klappbar ist, also beispielsweise aus der Inversstellung heraus nach oben, so daß eine gewickelte Packagestellung erreicht wird. Durch diese Packagestellung des Fahrzeugsitzes 1 kann das Ladevolumen des Kofferraums noch mehr erhöht werden, beispielsweise in dem die Fahrzeugsitze der verschiedenen Sitzreihen nach vorne geschoben werden, oder der Fahrzeugsitz 1 aus dem Kraftfahrzeug entnommen wird.

Im ersten Ausführungsbeispiel ist der Fahrzeugsitz 1 mittels eines an sich bekannten Längseinstellers 9 am Fahrzeugboden angebracht und in Längsrichtung verschiebbar. Auf den Sitzschienenpaaren des Längseinstellers 9 ist auf jeder Fahrzeugsitzseite eine jeweils zur Innenseite des Fahrzeugsitzes 1 hin geöffnete Führungsschiene 11 angebracht, welche für die nachfolgend beschriebene Funktionsweise als fahrzeugstrukturfest angesehen werden kann. Eine im wesentlichen rohrförmige, an ihren beiden Enden mit je einer Abkröpfung versehene vordere Quertraverse 13 durchdringt und verbindet die beiden vorderen Enden der Führungsschiene 11. Eine parallel zur vorderen Quertraverse 13 angeordnete, ebenfalls im wesentlichen rohrförmige und an ihren beiden Enden mit je einer Abkröpfung versehene, hintere Quertraverse 15 ist an ihren Enden jeweils mit einem Gleitstein 16 verbunden, welcher in der zugeordneten Führungsschiene 11 in Längsrichtung verschiebbar geführt ist. Die hintere Quertraverse 15 kann in abgewandelter Ausführung durch ihre beiden abgekröpften Endabschnitte ersetzt sein, welche auch voneinander abgewandt ausgerichtet sein können.

Das Sitzkissen 4 weist an seinem vorderen Ende auf der Unterseite, d.h. an seinem Sitzrahmen, zwei entriegelbare Schlösser 20 auf, mittels welcher das Sitzkissen 4 in der Gebrauchsstellung an der vorderen Quertraverse 13 eingehakt und mit dieser verriegelt ist. An seinem hinteren Ende ist das Sitzkissen 4 gelenkig an der hinteren Quertraverse 15 angebracht, beispielsweise mittels über die hintere Quertraverse 15 geschobener Lagerbuchsen. Der mittlere Abschnitt der hinteren Quertraverse 15 definiert die Kissenschwenkachse 7.

Ein Stück vor der hinteren Quertraverse 15 stehen von der Unterseite des Sitzkissens 4 zwei sichelförmige Bauteile ab, im folgenden als Sperrklinken 22 bezeichnet, von denen jeweils eine durch eine Öffnung in der Oberseite der zugeordneten Führungsschiene 11 dringt und als Sperre formschlüssig am Gleitstein 16 anliegt, welcher an diesem, seinem vorderen Ende entsprechend der Krümmung der Sperrklinke 22 konvex, im Profil seitlich kreisbogenförmig ausgebildet ist. An der Unterseite des Sitzkissens 4 ist ferner ein Kniehebel 24 angelenkt, welcher ungefähr in seiner Mitte ein Kniegelenk 26 aufweist und welcher an seinem anderen Ende an der vorderen Quertraverse 13 angelenkt ist.

Zum Übergang in die Inversstellung werden zunächst die Schlösser 20 entriegelt und das Sitzkissen 4 an seinem vorderen Ende angehoben, wodurch sich der Kniehebel 24 streckt und die Sperrklinken 22 sich entlang der Gleitsteine 16 bewegen. Sobald der Kniehebel 24 vollständig gestreckt ist, sichert eine Hülse 28, welche sich beispielsweise federbelastet über das Kniegelenk 26 schiebt, diesen gestreckten Zustand. Zugleich geben die Sperrklinken 22 die Gleitsteine 16 frei. Das Sitzkissen 4 kann nun samt angebrachter Lehne 6 nach vorne geschoben werden, wobei die entsperrten Gleitsteine 16 in den Führungsschienen 11 nach vorne fahren, das Sitzkissen 4 noch etwas weiter nach oben schwenkt und der gestreckte Kniehebel 24 sich noch etwas aufrichtet, bis das Sitzkissen 4 schließlich bei Anschlagen der Gleitsteine 16 an den abgekröpften Enden der vorderen Quertraverse 13 eine näherungsweise vertikale Stellung einnimmt.

Eine Verriegelungsvorrichtung 31 auf der Oberseite der Führungsschienen 11 mit einem mittels einer Wippe schwenkbar gelagerten und durch eine Feder vorgespannten Stift 33 sichert diese Inversstellung, indem der Stift 33 durch eine Öffnung in die Führungsschiene 11 greift, bei Anlaufen des Gleitsteins 16 nach oben gedrückt und dann federbelastet in eine Aufnahme des Gleitsteins 16 einfällt. Falls gewünscht, kann durch Hochklappen der Lehne 6 eine Packagestellung erreicht werden. Zur Rückkehr in die Gebrauchsstellung sind die Stifte 33 herauszuziehen, und dann ist in umgekehrter Reihenfolge der beschriebenen Schritte das Sitzkissen 4 nach hinten zu fahren und nach Verschieben der Hülse 28 nach unten zu schwenken.

Die Führungsschienen 11 brauchen nicht direkt auf dem Längseinsteller 9 befestigt zu sein, sondern können durch Abstandhalter höher gelegt sein, beispielsweise für einen Van. In einer ersten Abwandlung des ersten Ausführungsbeispiels sind für den gleichen Zweck die Führungsschienen 11' als stangenförmige Längsstreben ausgebildet, die mittels Querstreben zu einem auf Stützen gelagerten Rahmen verbunden sind, und die Gleitsteine 16' sitzen verschiebbar auf den Führungsschienen 11' und weisen einen drehbaren, mit dem Sitzkissen 4 verbunden Gelenkteil auf. Eine Sperre, die zuvor durch die Sperrklinken 22 realisiert worden ist, kann in die Gleitsteine 16' integriert sein.

In einer zweiten Abwandlung des ersten Ausführungsbeispiels weisen die Führungsschienen 11" eine Schwalbenschwanzform auf, während die Gleitsteine 16" als Schlitten ausgebildet sind, welche die Führungsschienen 11" übergreifen.

In einer dritten, nicht dargestellten Abwandlung des ersten Ausführungsbeispiels sind die Gleitsteine in Hinblick auf eine geringer Reibung mit Rollen versehen.

Das zweite Ausführungsbeispiel stimmt, soweit nachfolgend nicht anders beschrieben, mit dem ersten Ausführungsbeispiel überein, weshalb gleiche und gleichwirkende Bauteile um 100 höhere Bezugszeichen tragen. Während die Führungsschienen 111 mit der Verriegelungsvorrichtung 131, die vordere Quertraverse 113 mit dem Kniehebel 124 und die Schlösser 120 des Sitzkissens gleich sind, ist an jedem Gleitstein 116 zum einen eine Schwinge 134 angelenkt und zum anderen ein hinterer Anschlag 136 für die Gebrauchsstellung und ein vorderer Anschlag 138 für die Inversstellung vorgesehen. Am oberen Ende der Schwingen 134 ist wiederum die hintere Quertraverse 115 angebracht, welche die Kissenschwenkachse 107 für das daran angelenkte Sitzkissen definiert und welche auch durch zwei miteinander fluchtende Zapfen ersetzt sein kann.

Zum Übergang von der Gebrauchsstellung in die Inversstellung sind wie zuvor zunächst die Schlösser 120 zu entriegeln, das Sitzkissen hochzuschwenken bis der Kniehebel 124 gestreckt ist und dann eine weitere Verriegelungsvorrichtung 139 des Gleitsteins 116 zu entriegeln, sofern nicht eine automatische Aufhebung der Sperre durch Aufschwenken der Sperrklinken oder dergleichen erfolgt. Nun können die Gleitsteine 116 nach vorne geschoben werden, wobei zugleich die Schwingen 134 sich vom jeweiligen hinteren Anschlag 136 lösen und nach vorne schwenken, bis sie jeweils in Anlage an den vorderen Anschlag 138 gelangen. Die weitere Kinematik stimmt mit dem ersten Ausführungsbeispiel überein. Aufgrund der Schwingen 134 kann sowohl der Fahrzeugsitz für die Gebrauchsstellung höher gelegt werden als auch der Unterbau in einer möglichen Packagestellung im hinteren Bereich flach verbleiben.

In einer ersten Abwandlung zum zweiten Ausführungsbeispiel sind zur Lagerung der Schwingen 134 anstelle der längsverschiebbaren Gleitsteine ortsfeste Steine 116' vorgesehen, welche direkt am Fahrzeugboden befestigt sind und die Anschläge 136 und 138 tragen. Entsprechend ist auch die vordere Quertraverse direkt am Fahrzeugboden befestigt.

In einer zweiten Abwandlung zum zweiten Ausführungsbeispiel sind an den Schwingen 134 Querzapfen 140" angebracht, welche mit weiteren Schlössern 141" zusammenwirken, die an den Führungsschienen befestigt sind. Die hinteren Anschläge an den Gleitsteinen 116" entfallen.

In einer dritten Abwandlung zum zweiten Ausführungsbeispiel ist wieder die schienenfeste, abgekröpfte, hintere Quertraverse 115' vorgesehen, welche aber hier nicht mit der Kissenschwenkachse 107 übereinstimmt. Am Sitzkissen sind weitere Schlösser 141 " angebracht, welche in der Gebrauchsstellung mit der hinteren Quertraverse 115' verriegelt sind. Die hinteren Anschläge an den Gleitsteinen 116" entfallen.

Beim zweiten Ausführungsbeispiel und seinen Abwandlungen können selbstverständlich die Führungsschienen, soweit vorhanden, und Gleitsteine in der Art der Abwandlungen des ersten Ausführungsbeispiels ausgebildet sein.

Ein drittes Ausführungsbeispiel stimmt im wesentlichen mit den beiden anderen Ausführungsbeispielen überein, weshalb gleiche und gleichwirkende Bauteile um 200 bzw. 100 höhere Bezugszeichen tragen. Ziel des dritten Ausführungsbeispiels ist es, die Schwenk- und die Vorwärtsbewegung des Sitzkissens in Hinblick auf eine Einhandbedienung besser zu koppeln. Hierfür ist eine Koppel 244 in Form einer Stange oder eines Seiles vorgesehen, welche bzw. welches an einem Ende am Kniehebel 224 oder am Sitzkissen angebracht ist. Am anderen Ende ist die Koppel 244 wenigstens indirekt mit den Gleitsteinen 216 verbunden, beispielsweise mit einer Querverbindung zwischen den beiden Gleitsteinen 216, mit der hinteren Quertraverse oder mit einer Querverbindung zwischen den beiden Schwingen. Sobald der Kniehebel 224 gestreckt ist, zieht er mit seiner weiteren Schwenkbewegung die Gleitsteine 216 nach vorne.

Das dritte Ausführungsbeispiel kann bezüglich der Ausgestaltung im Bereich der Gleitsteine entsprechend dem ersten Ausführungsbeispiel und seinen Abwandlungen oder entsprechend dem zweiten Ausführungsbeispiel und seinen Abwandlungen zuzüglich der Kombination des zweiten Ausführungsbeispiels mit den Abwandlungen des ersten Ausführungsbeispiels ausgebildet sein.

Das vierte Ausführungsbeispiel ähnelt wiederum den vorherigen Ausführungsbeispielen, weshalb die Bezugszeichen der gleichen und gleichwirkenden Bauteile um weitere 100 erhöht sind. Im vierten Ausführungsbeispiel erfolgt der Übergang zwischen der Gebrauchsstellung und der Inversstellung (und zurück) motorisch. In jeder Führungsschiene 311 ist eine Zahnstange 351 ausgebildet, welche ein Ritzel 352 kämmt. Eine zwischen beiden Fahrzeugsitzseiten verlaufende, bügelartige Motorenhalterung 354, welche an ihren beiden Ende gleitend auf der Oberseite der Führungsschienen 311 gelagert sein kann, trägt einen Motor 356, auf dessen Antriebswelle 358 die Ritzel 352 drehfest sitzen.

Auf einem gezahnten Abschnitt der Antriebswelle 358 sitzt auf beiden Fahrzeugsitzseiten je ein Planetengetriebe 360, dessen Gehäuse mit der Unterseite des Sitzkissens verbunden ist. Wenn der Motor 356 läuft, schwenkt er über die Planetengetriebe 360 - mit einer gewissen Untersetzung - das Sitzkissen nach oben und bewegt es zugleich über die Ritzel 352 nach vorne. Das Strecken des Kniehebels ist entsprechend den anderen Ausführungsbeispielen verwirklicht, wobei das Ritzel 352 bis zum Erreichen des gestreckten Zustandes des Kniehebels beispielsweise durch Sperrklinken wie im ersten Ausführungsbeispiel erfolgt.

Das fünfte Ausführungsbeispiel gleicht den anderen Ausführungsbeispielen, weshalb gleiche und gleichwirkende Bauteile Bezugszeichen tragen, die um 400 gegenüber dem ersten Ausführungsbeispiel höher sind, jedoch ist kein Kniehebel vorgesehen. Bei diesem Fahrzeugsitz 401 ist das Sitzkissen 404 in seiner Mitte am oberen Ende einer vorderen Schwinge 465 und mit seinem hinteren Ende etwa in der Mitte einer hinteren Schwinge 434 angelenkt, wobei die Lehne 406 am oberen Ende der hinteren Schwinge 434 angelenkt ist. Die vordere Schwinge 465 ist mit ihrem unteren Ende am vorderen Ende einer Führungsschiene 411 angelenkt. Die hintere Schwinge 434 ist mit ihrem unteren Ende an einem in der Führungsschiene 411 beweglichen Gleitstein 416 angelenkt, wodurch eine Kissenschwenkachse 407 definiert wird. Der Gleitstein 416 ist in der Gebrauchsstellung am hinteren Ende der Führungsschiene 411 angeordnet. Eine Koppel 444 zur Reduktion der Freiheitsgrade ist einerseits zusammen mit der vorderen Schwinge 465 am Sitzkissen 404 und andererseits zusammen mit der hinteren Schwinge 434 am Gleitstein 416 angelenkt. Alternativ ist das Sitzkissen 404 starr mit der hinteren Schwinge 434 verbunden, so daß die Koppel 444 entfallen kann. Eine am vorderen Ende des Sitzkissens 404 auf dessen Unterseite vorgesehene Verriegelungsvorrichtung 431, welche mit einer bügelförmigen, vorderen Quertraverse 413 zusammenwirkt, hält den Fahrzeugsitz 401 in der Gebrauchsstellung verriegelt.

Wie in den anderen Ausführungsbeispielen, kann der Fahrzeugsitz 401 in eine Inversstellung überführt werden. Hierzu wird die Verriegelungsvorrichtung 431 entriegelt und der Gleitstein 416 nach vorne geschoben. Dadurch schwenkt das Sitzkissen 404 um die Kissenschwenkachse 407 und richtet sich auf, während die hintere Schwinge 434 mit der Lehne 406 nach hinten klappt, und zwar ebenfalls um die sich nach vorne verlagernde Kissenschwenkachse 407. In seiner vordersten Stellung verriegelt der Gleitstein 416 mit der Führungsschiene 411, um die Inversstellung zu verriegeln. Optional wird die Lehne 406 zuerst auf das Sitzkissen 404 geklappt, dann dieses aufgerichtet, so daß eine Packagestellung eingenommen wird, und schließlich die Lehne 406 im Bedarfsfall wieder vom Sitzkissen 404 weggeklappt.

In einer ersten Abwandlung zum fünften Ausführungsbeispiel ist am oberen Ende der Koppel 444' der Schlitz einer ersten Schlitz-Zapfen-Führung 467 vorgesehen, während an der vorderen Schwinge 465 der Zapfen angeformt ist, welcher in der Gebrauchsstellung mit dem Sitzkissen 404 verriegelt ist. Ferner ist an der hinteren Schwinge 434 ein Zapfen einer zweiten Schlitz-Zapfen-Führung 469 angeformt, deren Schlitz in der Führungsschiene 411' ausgebildet ist. Dadurch ist die hintere Schwinge 434 vom Gleitstein 416 lösbar und relativ zu diesem und zur Führungsschiene 411' beweglich. Durch Entriegeln der vorderen Schwinge 465 und der hinteren Schwinge 434 kann das Sitzkissen 404 in eine flache Bodenstellung abgesenkt werden, wobei die beiden Schlitz-Zapfen-Führungen 467 und 469 für den Geometrieausgleich sorgen, d.h. die hintere Schwinge 434 bewegt sich nach vorne und die vordere Schwinge 465 nach unten. Die Inversstellung wird entsprechend dem fünften Ausführungsbeispiel ohne Ausnutzung der beiden Schlitz-Zapfen-Führungen 467 und 469 erreicht.

In einer zweiten Abwandlung des fünften Ausführungsbeispiels, welche der ersten Abwandlung gleicht, ist in der vorderen Schwinge 465' die erste Schlitz-Zapfen-Führung 467' ausgebildet, während die zweite Schlitz-Zapfen-Führung 469" dem Sitzkissen 404 und dem oberen Ende der hinteren Schwinge 434' zugeordnet ist. Die hintere Schwinge 434' ist mittels einer dritten Schlitz-Zapfen-Führung 471 mit einer Lehnenschwinge 434" gekoppelt. Auch hier kann sowohl eine Bodenstellung als auch eine Inversstellung eingenommen werden.

Auch das sechste Ausführungsbeispiel gleicht den anderen Ausführungsbeispielen, weshalb gleiche und gleichwirkende Bauteile Bezugszeichen tragen, die um 500 gegenüber dem ersten Ausführungsbeispiel höher sind. Wiederum ist kein Kniehebel vorgesehen. Bei diesem Fahrzeugsitz 501 ist das Sitzkissen 504 an seinem vorderen Ende am oberen Ende eines Vorderbeines 575 angelenkt und zugleich starr mit einer Koppel 544 verbunden, etwa in der Mitte an einer vorderen Schwinge 565 angelenkt und an seinem hinteren Ende, an welchem auch die Lehne 506 angelenkt ist, starr mit einer hinteren Schwinge 534 verbunden. Die vordere Schwinge 565 ist an ihrem unteren Ende am vorderen Ende der Führungsschiene 511 angelenkt, während das Vorderbein 575 mit einer Verriegelungsvorrichtung lösbar an der gleichen Stelle verriegelt ist. Die Koppel 544 und die hintere Schwinge 534 sind unter gleichzeitiger Definition der Kissenschwenkachse 507 an einem Gleitstein 516 angelenkt, welcher - wie in der vorherigen Ausführungsbeispielen - in der Führungsschiene 511 verschiebbar und verriegelbar ist. In der Gebrauchsstellung ist der Gleitstein 516 am hinteren Ende der Führungsschiene 511 angeordnet. Eine Gasfeder 577 wirkt zwischen der vorderen Schwinge 565 und der Führungsschiene 511.

Wie in den anderen Ausführungsbeispielen, kann der Fahrzeugsitz 501 in eine Inversstellung überführt werden. Hierzu wird der entriegelte Gleitstein 516 nach vorne geschoben, wodurch das Sitzkissen 504 um die Kissenschwenkachse 507 schwenkt und sich - von der Gasfeder 577 unterstützt - aufrichtet. Das Vorderbein 575 legt sich - durch eine Drehfeder belastet - an das Sitzkissen 504 an. Mit der nach hinten schwenkenden hinteren Schwinge 534 klappt auch die Lehne 506 um die Kissenschwenkachse 507 nach hinten. Optional wird die Lehne 506 zuerst auf das Sitzkissen 504 geklappt, dann dieses aufgerichtet, so daß eine Packagestellung eingenommen wird, und schließlich die Lehne 506 im Bedarfsfall wieder vom Sitzkissen 504 weggeklappt.

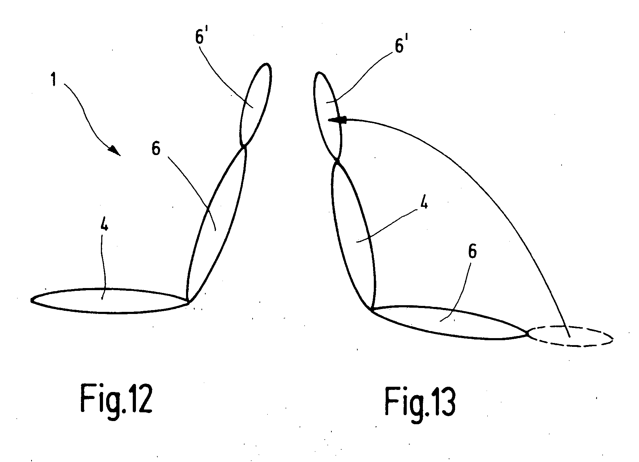

In einer gemeinsamen Abwandlung zu allen Ausführungsbeispielen und ihren Abwandlungen ist die Lehne 6 dafür ausgelegt, daß sie in der Inversstellung zum Sitzkissen wird, und umgekehrt, daß das Sitzkissen 4 zur Lehne wird, d.h. die Inversstellung eine Gebrauchsstellung mit Ausrichtung entgegen der Fahrtrichtung wird. Hierfür kann die Lehne beispielsweise ein Lehnen-Verlängerungskissen 6' mit integrierter oder aufgesteckter Kopfstütze aufweisen, welches von der Lehne 6 abgetrennt und nach Erreichen der Inversstellung als Verlängerung in das bisherige Sitzkissen 4 eingesteckt wird, wie in Fig. 12 und 13 dargestellt ist.

Alle Ausführungsbeispiele können ferner so abgewandelt sein, daß die Führungsschienen direkt mit dem Fahrzeugboden verbunden sind.

In allen Ausführungsbeispielen und Abwandlungen zeichnet sich die Inversstellung dadurch aus, daß die Sitzfläche des Sitzkissens, welche als gepolsterte Oberseite des Sitzkissens in der Gebrauchsstellung zum Benutzer hin nach oben weist, in der Inversstellung nach hinten weist, während die Lehnenfläche der Lehne, welche als gepolsterte Vorderseite in der Gebrauchsstellung zum Benutzer hin nach vorne weist, in der Inversstellung nach oben weist.

### Bezugszeichenliste

- 1, 401, 501: Fahrzeugsitz
- 4, 404, 504: Sitzkissen
- 6, 406, 506: Lehne
- 6': Lehnen-Verlängerungskissen
- 7, 107, 407, 507: Kissenschwenkachse
- 9: Längseinsteller
- 11, 11', 11", 111, 311, 411, 511: Führungsschiene
- 13, 113, 413: vordere Quertraverse
- 15, 115, 115': hintere Quertraverse
- 16, 16', 16", 116, 116', 116", 216, 416, 516: (Gleit)stein
- 20, 120: Schloß
- 22: Sperrklinke
- 24, 124, 224: Kniehebel
- 26: Kniegelenk
- 28: Hülse
- 31, 131,431: Verriegelungsvorrichtung
- 33: Stift
- 134, 434, 434', 534: (hintere) Schwinge
- 136: hinterer Anschlag
- 138: vorderer Anschlag
- 139: weitere Verriegelungsvorrichtung
- 140": Querzapfen
- 141": weiteres Schloß
- 244, 444, 444', 544: Koppel
- 351: Zahnstange
- 352: Ritzel
- 354: Motorenhalterung
- 356: Motor
- 358: Antriebswelle
- 360: Planetengetriebe
- 434": Lehnenschwinge
- 465, 565: vordere Schwinge
- 467: erste Schlitz-Zapfen-Führung
- 469: zweite Schlitz-Zapfen-Führung
- 471: dritte Schlitz-Zapfen-Führung
- 575: Vorderbein
- 577: Gasfeder

## Patentansprüche

1. Fahrzeugsitz, insbesondere Kraftfahrzeugsitz, mit einem Sitzkissen (4; 404; 504) und einer Lehne (6; 406; 506), der von einer Gebrauchsstellung, in welcher das Sitzkissen (4; 404; 504) im wesentlichen flach und die Lehne (6; 406; 506) im wesentlichen aufrecht angeordnet ist, durch Bewegen des Sitzkissens (4; 404; 504) und/oder der Lehne (6; 406; 506) in wenigstens eine weitere Stellung überführbar ist, **dadurch gekennzeichnet, daß** diese weitere Stellung eine Inversstellung ist, in welcher das Sitzkissen (4; 404; 504) im wesentlichen aufrecht und die Lehne (6; 406; 506) flach angeordnet ist.

2. Fahrzeugsitz nach Anspruch 1, **dadurch gekennzeichnet, daß** das Sitzkissen (4; 404; 504) zum Übergang von der Gebrauchsstellung in die Inversstellung eine Schwenkbewegung nach oben um eine im hinteren Bereich vorgesehene Kissenschwenkachse (7; 107; 407; 507) vollführt.

3. Fahrzeugsitz nach Anspruch 2, **dadurch gekennzeichnet, daß** im vorderen Bereich des Sitzkissens (4) ein Kniehebel (24; 124; 224) angelenkt ist, welcher an seinem anderen Ende zumindest während des Übergangs von der Gebrauchsstellung in die Inversstellung fahrzeugstrukturfest angelenkt ist und welcher sich zumindest während eines Teils der Schwenkbewegung des Sitzkissens (4) streckt.

4. Fahrzeugsitz nach Anspruch 2 oder 3, **dadurch gekennzeichnet, daß** die Kissenschwenkachse (7; 107; 407; 507) zumindest während eines Teiles der Schwenkbewegung des Sitzkissens (4; 404; 504) eine Verschiebung nach vorne erfährt.

5. Fahrzeugsitz nach Anspruch 3 und 4, **dadurch gekennzeichnet, daß** die Verschiebung der Kissenschwenkachse (7; 107) erfolgt, nachdem der Kniehebel (24; 124; 224) gestreckt ist, wobei während der Verschiebung der Kissenschwenkachse (7; 107) das Sitzkissen (4) seine Schwenkbewegung fortsetzt.

6. Fahrzeugsitz nach Anspruch 4 oder 5, **dadurch gekennzeichnet, daß** für die Verschiebung der Kissenschwenkachse (7; 107; 407; 507) Führungsschienen (11; 11'; 11''; 111; 311; 411; 511) vorgesehen sind, welche zumindest während des Übergangs von der Gebrauchsstellung in die Inversstellung fahrzeugstrukturfest sind.

7. Fahrzeugsitz nach Anspruch 6, **dadurch gekennzeichnet, daß** Gleitsteine (16; 16' ; 16''; 116; 116''; 216; 416; 516) in den Führungsschienen (11; 11'; 11''; 111; 311; 411; 511 ) beweglich geführt sind, wobei die Kissenschwenkachse (7; 107; 407; 507) fest oder mittels beweglicher Schwingen (134) an den Gleitsteinen (16; 16' ; 16" ; 116; 116" ; 216; 416; 516) angebracht ist.

8. Fahrzeugsitz nach Anspruch 7, **dadurch gekennzeichnet, daß** zwischen dem Kniehebel (24; 124; 224) und den Gleitsteinen (16; 16' ; 16" ; 116; 116" ; 216) oder zwischen dem Sitzkissen (404; 504) und den Gleitsteinen (416; 516) eine Koppel (244; 444; 444' ; 544) vorgesehen ist.

9. Fahrzeugsitz nach Anspruch 6, **dadurch gekennzeichnet, daß** ein mit den Führungsschienen ( 11; 11' ; 11 "; 111; 311 ) in Getriebeverbindung stehender Motor (356) das Sitzkissen (4) einerseits schwenkt und andererseits entlang der Führungsschienen ( 11; 11' ; 11"; 111; 311 ) verschiebt.

10. Fahrzeugsitz (1; 401; 501 ) nach einem der Ansprüche 1 bis 9, **dadurch gekennzeichnet, daß** der Fahrzeugsitz (1; 401; 501) in der Inversstellung einsitzbar und entgegen der Fahrtrichtung ausgerichtet ist.
